# EUROPEAN PATENT APPLICATION

(11) **EP 1 394 721 A2**
(43) Date of publication of application: **03.03.2004**
(21) Application number: 03019257.9
(22) Date of filing: 26.08.2003
(51) Int. Cl.: G06K 7/00

(54) **Electronic apparatus and control method of expansion device**

(30) Priority: 30.08.2002 JP 2002253067
(71) Applicant: Kabushiki Kaisha Toshiba, Tokyo (JP)
(72) Inventor: Maruyama, Takeshi, 1-1 Shibaura 1-chome Minato-ku Tokyo 105 (JP)
(74) Representative: Henkel, Feiler, Hänzel

(57) **Abstract**

An electronic apparatus includes a card slot (30) into which a card-shaped expansion device (20) is inserted. A connector (100) connects with the expansion device inserted in the card slot. A slide mechanism (32,303) slides the connector in the card slot in an insertion direction and a pull direction of the expansion device, holds the connector in a first position (P1) in which the expansion device projects from the card slot, and holds the connector in a second position (P2) in which the expansion device projects less from the card slot than in the first position. A control circuit (102) is provided to control the expansion device connected to the connector in accordance with a position into which the connector is slid.

## Description

The present invention relates to an electronic apparatus having a card slot into which a card-shaped expansion device is inserted, and a control method of the expansion device.

In an electronic apparatus having a card slot into which a card-shaped expansion device (hereinafter referred to as the expansion card) is inserted, various techniques have been developed for wireless network connection by use of the expansion card (e.g., refer to Japanese Patent Application KOKAI Publication No. 2002-91709).

The expansion card having this kind of wireless functionality generally has such a card shape that a portion of the card projects from the card slot when the expansion card is inserted into the card slot, and a wireless antenna is built in the projecting portion. Such a configuration realizes the efficient wireless function by which emission characteristics of the wireless antenna can be fully achieved.

In this structure, however, the expansion card having the built-in wireless antenna is always used in a state where the portion projects from the card slot. Therefore, in a notebook-type personal computer, PDA, or the like that is especially easy to carry, the projecting portion of the expansion card is easily subjected to an external force such as impact or pressure, which can easily lead to not only damage in the expansion card, but also damage in a main unit of the apparatus.

An object of the present invention is to provide an electronic apparatus capable of realizing a wireless function by use of an expansion card and a control method of the expansion device that can maintain a stable wireless communication operation without causing, for example, damage in the card or damage in a main unit of the apparatus.

Specifically, according to one aspect of the present invention, the expansion card can be continuously used in each of card slot positions of a state where a portion of the expansion card projects from a card slot and a state where the expansion card is entirely inserted in the card slot, and an operation of a specific circuit in the expansion card can variably be controlled in accordance with the position in which the expansion card is used.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of essential parts of an electronic apparatus in a first embodiment of the present invention;
FIG. 2 is a perspective view showing an external configuration of the electronic apparatus according to the first embodiment;
FIG. 3A and FIG. 3B are diagrams showing a configuration of a slide mechanism and an insertion state of an expansion card according to the first embodiment;
FIG. 4A and FIG. 4B are diagrams describing the operation of the first embodiment;
FIG. 5A to FIG. 5C are diagrams describing the operation of the first embodiment; and
FIG. 6A to FIG. 6D are diagrams describing an operation of a second embodiment of the present invention.

Embodiments of the present invention will be described below in reference to the drawings.

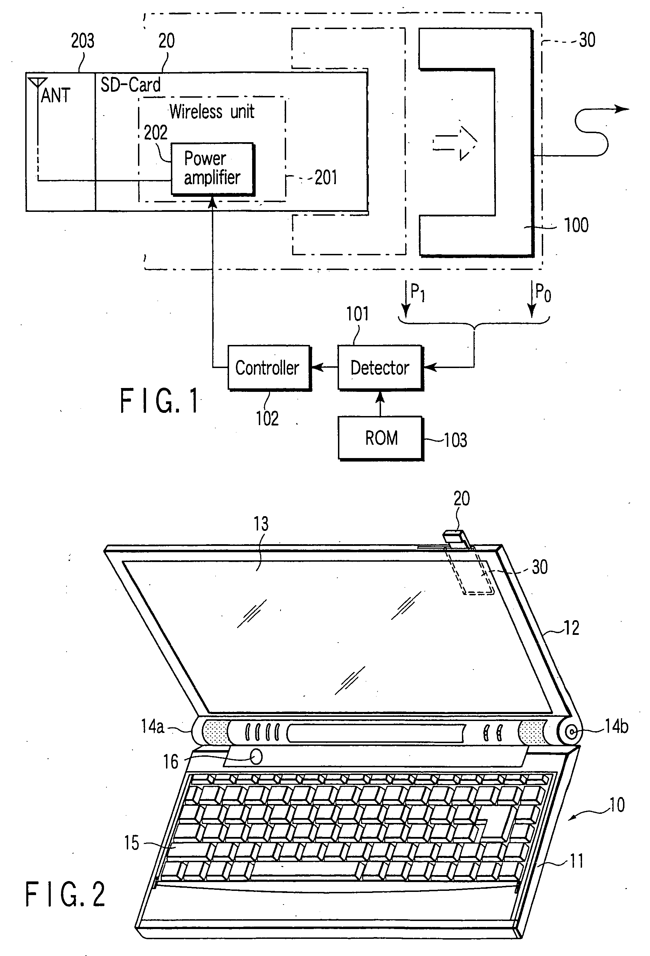

FIG. 1 is a block diagram showing a configuration of essential parts of an electronic apparatus according to a first embodiment of the present invention.

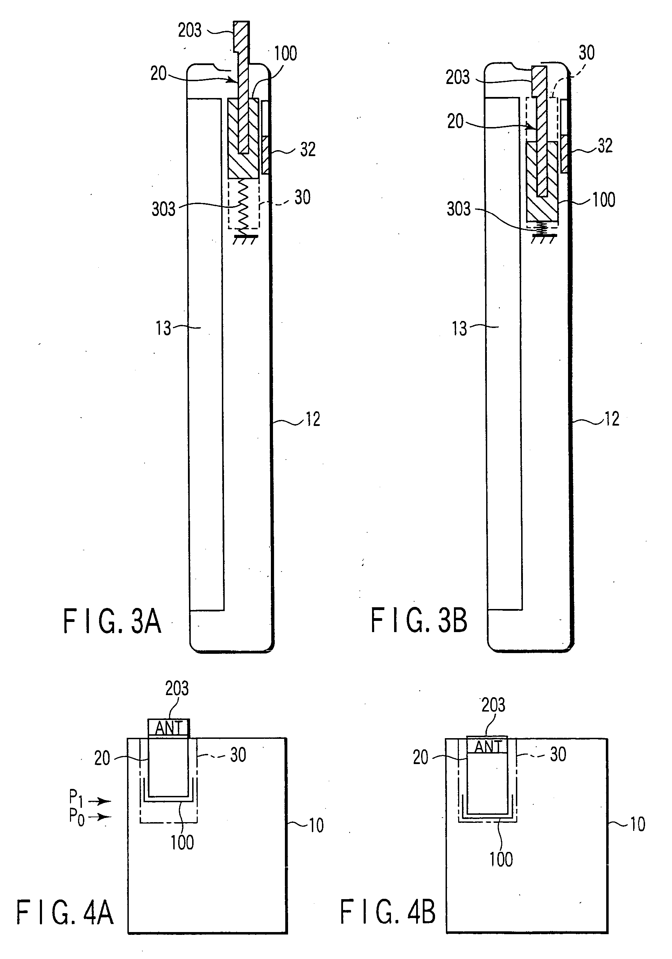

A main unit of the electronic apparatus comprises a connector 100 for card connection (hereinafter, referred to as a "connector 100") which performs a connection with an expansion card (e.g., a secure digital card, or "SD-Card") 20 inserted in a card slot 30, and a slide mechanism which slidably holds the connector 100 in the card slot 30 and holds it at a first position (P1) and a second position (P0), respectively. A configuration of the slide mechanism will be described later in reference to FIG. 3A and FIG. 3B. In the first embodiment, the first position (P1) will be referred to as a position P1, and the second position (P0) will be referred to as a position P0.

Furthermore, the main unit of the apparatus comprises a detector 101 which detects the position (P1, or P0) of the connector 100 in the card slot 30, a controller 102 which controls transmission power of a power amplifier 202 in a wireless unit 201 built in the expansion card 20 on the basis of a detection signal (position detection signal) from the detector 101, a ROM 103 which stores control information used by the controller 102, and the like. In the first embodiment, a set value of the transmission power corresponding to the position of the connector 100 is stored in the ROM 103.

Furthermore, the expansion card (SD-Card) 20, which is inserted in the card slot 30 and configures an expansion device, is inserted into the card slot 30. The expansion card 20 has such a size and a shape that the rear end portion thereof projects from an opening of the card slot 30 to a predetermined extent when the connector 100 is held at the position P1. A wireless antenna module (ANT) 203, which transmits a power-amplified wireless signal of the power amplifier 202 provided in the wireless unit 201, is built in the rear end portion of the expansion card 20.

FIG. 2 is a perspective view showing an external configuration of the electronic apparatus according to the first embodiment, and shows a portable type personal computer as an example. In the configuration shown in FIG. 2, the main unit of the apparatus (main unit of the personal computer) 10 has a base case 11 and a display unit case 12. The base case 11 comprises a keyboard 15, a power source switch 16, a circuit board (not shown) on which a CPU is mounted, and the like. The display unit case 12 is rotatably held by the base case 11 via hinge portions 14a, 14b.

The display unit case 12 comprises an LCD panel 13 and the card slot 30 to insert the expansion card 20 shown in FIG. 1. In the embodiment shown in FIG. 2, the display unit case 12 comprises the card slot 30 to insert the expansion card 20 shown in FIG. 1 at its free end backside portion. FIG. 2 shows an insertion state of the inserted expansion card 20 when the connector 100 is held at the position P1 shown in FIG. 1.

FIG. 3A and FIG. 3B are diagrams showing a configuration of a slide mechanism which slidably holds the connector 100 in the card slot 30 and holds it at the position P1 and position P0, respectively, and showing an insertion state of the inserted expansion card 20 at the respective positions P1, P0 in the first embodiment. FIG. 3A is a diagram showing an inserted state of the expansion card 20 when the connector 100 is held at the position P1. FIG. 3B is a diagram showing an inserted state of the expansion card 20 when the connector 100 is held at the position P0.

In the embodiment shown in FIG. 3A and FIG 3B, the slide mechanism of the connector 100 is configured by a push-push type switch which comprises an eject button 32 and a returning spring 303 to switch the position in two steps.

In the slide mechanism of the connector 100 using the push-push type switch, the connector 100 in the card slot 30 is switched to the position P1 and position P0 alternately every time the expansion card 20 inserted in the card slot 30 is pressed in an insertion direction,

FIG. 4A to FIG. 5C are diagrams each describing the operation in the first embodiment.

FIG. 4A is a diagram showing an insertion state of the expansion card 20 when the connector 100 is held at the position P1. FIG. 4B is a diagram showing an insertion state of the card slot 30 when the connector 100 is held at the position P0. The expansion card 20 at the position P0 projects outwardly from the opening of the card slot 30 less than the expansion card at position P1. According to one embodiment of the present invention, the expansion card 20 projects outwardly by about 5 mm from the opening of the card slot 30. The expansion card 20 in position P0 may project outwardly from the opening of the card slot 30, be flush with the opening of the card slot 30, or even be inward of the opening of the card slot 30 while still maintaining an active transmission state.

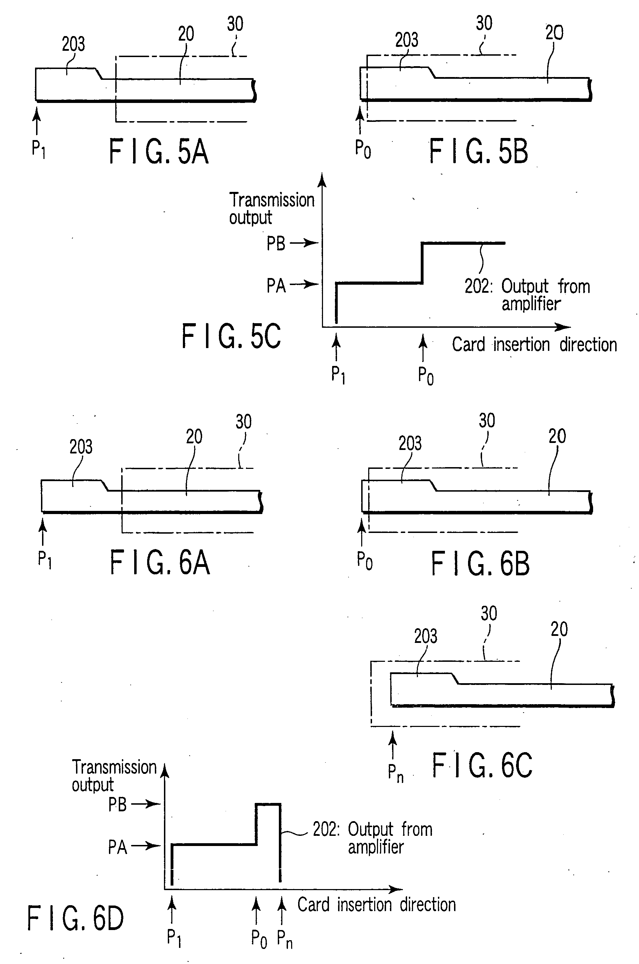

FIG. 5A is a diagram showing an insertion state of the expansion card 20 when the connector 100 is held at the position P1. FIG. 5B is a diagram showing an insertion state of the card slot 30 when the connector 100 is held at the position P0. FIG. 5C is a graph showing a variable state of a transmission output from the wireless unit 201 in the state of FIG. 5A where the connector 100 is held at the'position P1 and in the state of FIG. 5B where it is held at the position P0. Similarly to FIG. 4B above, the expansion card 20 at the position P0 of FIG. 5B projects outwardly from the opening of the card slot 30 less than the expansion card at position P1 of FIG. 5A. According to one embodiment of the present invention, the expansion card 20 projects outwardly by about 5 mm from the opening of the card slot 30. The expansion card 20 in position P0 may project outwardly from the opening of the card slot 30, be flush with the opening of the card slot 30, or even be inward of the opening of the card slot 30 while still maintaining an active transmission state. A transmission output (PB) when the connector 100 is held at the position P0 is increased as compared with a transmission output (PA) when it is held at the position P1. This increase compensates for attenuation of a transmission electric wave emitted from the wireless antenna module (ANT) 203 to the external of the apparatus when the wireless antenna module (ANT) 203 is housed in the card slot 30.

Here, the operation in the first embodiment of the present invention will be described in reference to FIG. 1 to FIG. 5C.

When the expansion card 20 is inserted into the card slot 30 provided at the free end backside portion of the display unit case 12 shown in FIG. 2, the connector 100 is held at the position P1 at a first insertion step by the function of the slide mechanism shown in FIG. 3A and FIG. 3B. FIG. 2 to FIG. 5A show insertion states of the expansion card 20. In this case, the wireless antenna module (ANT) 203 built in the rear end portion in an insertion direction of the expansion card 20 projects from the card slot 30. As a result, the transmission electric wave emitted from the wireless antenna module (ANT) 203 to the external of the apparatus is in a state hardly influenced by a shielding function of the apparatus case.

The position P1 of the connector 100 in the card slot 30 is detected by the detector 101 and then the controller 102 is informed thereof.

On receipt of a position detection signal from the detector 101, the controller 102 controls the transmission power of the power amplifier 202 provided in the wireless unit 201 of the expansion card 20 in accordance with the position indicated by the detection signal. In other words, on receipt of a position detection signal from the detector 101 indicating that the connector 100 is at the position P1, the controller 102 refers to information indicating the set value of the transmission power for each position (P1, P0) stored in the ROM 103, and variably controls the transmission power of the power amplifier 202. Here, since the position detection signal indicating that the connector 100 is at the position P1 is received, the transmission output (transmission power) of the power amplifier 202 is controlled to be on the low transmission output level (PA) shown in FIG. 5C.

If the expansion card 20 is further pressed along an insertion direction in a state where the expansion card 20 is inserted in the card slot 30, the connector 100 is held at the position P0 at a next insertion step by the function of the slide mechanism shown in FIG. 3A and FIG. 3B. FIG. 3A to FIG. 5B show insertion states of the expansion card 20. In this case, the wireless antenna module (ANT) 203 built in the rear end portion in an insertion direction of the expansion card 20 is housed in the card slot 30, which provides a state where the transmission electric wave emitted from the wireless antenna module (ANT) 203 to the external of the apparatus is attenuated by a shielding function of the apparatus case.

The position P0 of the connector 100 in the card slot 30 is detected by the detector 101 and then the controller 102 is informed thereof.

On receipt of a position detection signal from the detector 101 indicating that the connector 100 is at the position P0, the controller 102 refers to the information indicating the set value of the transmission power for each position (P1, P0) stored in the ROM 103, and variably controls the transmission power of the power amplifier 202. Here, since the position detection signal indicating that the connector 100 is at the position P0 is received, the transmission output (transmission power) of the power amplifier 202 is controlled to be on the high transmission output level (PB) shown in FIG. 5C.

As described above, as a function for control of the transmission power is provided to variably control the transmission power in accordance with the inserted position of the card, a stable communication operation can be maintained both in a state where the antenna portion of the expansion card 20 projects from the card slot 30 and in a state where the expansion card 20 is entirely inserted in the card slot 30.

A second embodiment of the present invention will be described in reference to FIG. 6A to FIG. 6D. The transmission power is controlled in accordance with the two positions of the connector 100 in the first embodiment, whereas the transmission power can be controlled in accordance with three positions (P1, P0, Pn) of the connector 100 in the second embodiment. In this case, instead of the push-push type switch to switch the position in two steps in the first embodiment, a push-push type switch to sequentially switch the position in three steps is used to configure the slide mechanism of the connector 100.

The second embodiment is particularly different from the first embodiment in that if the expansion card 20 is further pressed in an insertion direction in a state where the connector 100 in a card slot 30 for card connection is at the position P0 shown in FIG. 6B (e.g., a state where the rear end in an insertion direction of the expansion card 20 projects from the card slot 30 by 5 mm), the connector 100 is held at the position Pn shown in FIG. 6C. In this case, the expansion card 20 is entirely housed in the card slot 30.

On receipt of a position detection signal from the detector 101 indicating that the connector 100 is at the position Pn, the controller 102 controls to shut off the transmission output (transmission power) of the power amplifier 202 as shown in FIG. 6C.

Furthermore, in this case, the controller 102 cuts off unnecessary power supplies of the wireless unit 201 at the same time in predetermined order of control, and instead of this, activates a wired LAN, for example, thereby also enabling switching control from a wireless network to a wired network.

The transmission power in the expansion card is variably controlled in accordance with the stepwise insertion positions into the card slot in the configuration taken as an example in the above embodiments, which is not limited to this. For example, in an expansion card equipped with a Bluetooth wireless function, wireless LAN card or the like, not only the transmission power but also an amplification degree of a received signal (high frequency signal) may be controlled together. Alternatively, the present invention may be applied to a memory card using an SD card, smart media or the like, or may be applied to stepwise use limitation by a multifunction card or the like, or to stepwise switch of a function, for example.

According to the embodiments of the present invention, in an electronic apparatus capable of realizing wireless functionality by use of, for example, the expansion card, a stable wireless communication operation can be maintained without causing, for example, damage in the card or damage in the main unit of the apparatus.

## Claims

1. An electronic apparatus **characterized by** comprising:
a card slot into (30) which a card-shaped expansion device is inserted;
a connector (100) to connect with the expansion device inserted in the card slot;
a slide mechanism (32, 303) that slides the connector in the card slot in an insertion direction and a pull direction of the expansion device, holds the connector in a first position in which the expansion device projects from the card slot, and holds the connector in a second position in which the expansion device projects less from the card slot than in the first position, wherein the expansion device is in an active transmission state in the first position and the second position; and
control means (102) for controlling an operation of the expansion device connected to the connector in accordance with a position into which the connector is slid.

2. The electronic apparatus according to claim 1, **characterized in that**
the expansion device has a wireless unit built in a rear portion in the insertion direction of the card slot, and
the control means varies a transmission output from the wireless unit in accordance with the position into which the connector is slid.

3. The electronic apparatus according to claim 2, **characterized in that**
the expansion device has a wireless antenna built in the rear portion in the insertion direction of the card slot, and
the slide mechanism slidably holds the expansion device connected to the connector, at the first position where the portion having the built-in wireless antenna projects from the card slot and at the second position where the portion having the built-in wireless antenna is housed in the card slot, respectively.

4. The electronic apparatus according to claim 3, **characterized in that** the control means lowers the transmission output from the wireless unit built in the expansion device when the expansion device is held at the first position by the slide mechanism relative to when the expansion device is held at the second position by the slide mechanism.

5. The electronic apparatus according to claim 1, **characterized in that**
the expansion device projects from the card slot by no more than 5 mm in the second position.

6. The electronic apparatus according to claim 2, **characterized in that**
the expansion device has the wireless antenna built in the rear portion in the insertion direction of the card slot,
the slide mechanism slidably holds the expansion device connected to the connector, at the first position where the portion having the built-in wireless antenna projects from the card slot, at the second position where the portion having the built-in wireless antenna is housed in the card slot, and at a third position where the expansion device is further inserted in the insertion direction beyond the second position, respectively, and
the control means lowers the transmission output of the wireless antenna built in the expansion device when the expansion device is held at the first position relative to when the expansion device is held at the second position, and stops the transmission output of the wireless antenna built in the expansion device when the expansion device is held at the third position.

7. A control method for an expansion device for an electronic apparatus including a card slot into which the expansion device is inserted, a connector to connect with the expansion device inserted in the card slot, and a slide mechanism that slides the connector in the card slot in an insertion direction and a pull direction of the expansion device, holds the connector in a first position in which the expansion device projects from the card slot, and holds the connector in a second position in which the expansion device projects less from the card slot than in the first position, wherein the expansion device is in an active transmission state in the first position and the second position, the method **characterized by** comprising:
detecting a position into which the connector is slid; and
controlling an operation of the expansion device connected to the connector in accordance with the position of the connector.

8. The control method of the expansion device according to claim 7, **characterized by** further including varying transmission power of a wireless unit built in the expansion device in accordance with the position of the connector.

9. The control method of the expansion device according to claim 7, further including lowering a transmission output of a wireless antenna built in the expansion device when the expansion device is held at the first position relative to when the expansion device is held at the second position.

10. The control method of the expansion device according to claim 8, **characterized by** further including lowering the transmission power of the wireless antenna built in the expansion device when the expansion device is held at the first position relative to when the expansion device is held at the second position, and cutting off the transmission power of the wireless antenna built in the expansion device when the expansion device is held at a third position where the expansion device is further inserted in the insertion direction beyond the second position.

11. An electronic apparatus, **characterized by** comprising:
a card slot (30) into which a card-shaped expansion device is inserted;
a connector (100) to connect with the expansion device inserted in the card slot;
a slide mechanism (32, 303) that slides the connector in the card slot in an insertion direction and a pull direction of the expansion device, holds the connector in a first position in which the expansion device projects from the card slot, and holds the connector in a second position in which the expansion device projects less from the card slot than in the first position, wherein the expansion device is in an active transmission state in the first position and the second position; and
a control circuit (102) to control an operation of the expansion device connected to the connector in accordance with a position into which the connector is slid.

12. The electronic apparatus according to claim 11, **characterized in that**
the expansion device has a wireless unit built in a rear portion in the insertion direction of the card slot, and
the control circuit varies a transmission output from the wireless unit in accordance with the position into which the connector is slid.

13. The electronic apparatus according to claim 12, **characterized in that**
the expansion device has a wireless antenna built in the rear portion in the insertion direction of the card slot, and
the slide mechanism slidably holds the expansion device connected to the connector, at the first position where the portion having the built-in wireless antenna projects from the card slot and at the second position where the portion having the built-in wireless antenna is housed in the card slot, respectively.

14. The electronic apparatus according to claim 13, **characterized in that** the control circuit lowers the transmission output from the wireless unit built in the expansion device when the expansion device is held at the first position by the slide mechanism relative to when the expansion device is held at the second position by the slide mechanism.

15. The electronic apparatus according to claim 11, **characterized in that**
the expansion device projects from the card slot by 5 mm in the second position.

16. The electronic apparatus according to claim 12, **characterized in that**
the expansion device has the wireless antenna built in the rear portion in the insertion direction of the card slot,
the slide mechanism slidably holds the expansion device connected to the connector, at the first position where the portion having the built-in wireless antenna projects from the card slot, at the second position where the portion having the built-in wireless antenna is housed in the card slot, and at a third position where the expansion device is further inserted in the insertion direction beyond the second position, respectively, and
the control circuit lowers the transmission output of the wireless antenna built in the expansion device when the expansion device is held at the first position relative to when the expansion device is held at the second position, and stops the transmission output of the wireless antenna built in the expansion device when the expansion device is held at the third position.
